Europäisches Patentamt

European Patent Office

Office européen des brevets

(11) Publication number: **0 446 393 B1**

# EUROPEAN PATENT SPECIFICATION

(45) Date of publication of patent specification: **27.07.94**   (51) Int. Cl.5: **C09D 7/00**, C08F 2/44

(21) Application number: **90104838.9**

(22) Date of filing: **14.03.90**

(54) **A method for producing a matt paint.**

(43) Date of publication of application:
**18.09.91 Bulletin 91/38**

(45) Publication of the grant of the patent:
**27.07.94 Bulletin 94/30**

(84) Designated Contracting States:
**DE ES FR GB IT**

(56) References cited:
**EP-A- 0 038 208**
**EP-A- 0 337 672**

**PATENT ABSTRACTS OF JAPAN, vol. 5, no. 67 (C-053), 7th May 1981; & JP-A-56 016 569**

(73) Proprietor: **DAINICHISEIKA COLOR & CHEMI-CALS MFG. CO. LTD.**
**7-6 Bakuro-cho 1-chome**
**Nihonbashi**
**Chuo-ku Tokyo 103(JP)**

(72) Inventor: **Ohkura, Ken**
**23-11, Denenchofu 2-chome**
**Ohta-ku, Tokyo(JP)**
Inventor: **Shinagawa, Yukio**
**4033-23, Mitsuke**
**Iwata-shi, Shizuoka Prefecture(JP)**
Inventor: **Shibata, Tamiaki/ Royal Château**
**Minami-Takabayashi F5 - 62, Takabayashi-cho**
**Hamamatsu-shi, Shizuoka Prefecture(JP)**

(74) Representative: **Sajda, Wolf E., Dipl.-Phys. et al**
**MEISSNER, BOLTE & PARTNER**
**Widenmayerstrasse 48**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

BACKGROUND OF THE INVENTION

1. Field of the Invention:

The present invention relates to a method for producing a matt paint which forms a colored film having a soft feel.

2. Description of the Prior Art:

There are conventionally known matt paints, such as a paint obtained by blending inorganic fine powder of silica, alumina, or calcium carbonate etc. into a vehicle having an ability of making a film, or a paint obtained by blending beads-type fine particles, such as polyethylene resin, polyurethane resin, epoxy resin, polyamide resin, polyester resin etc. into a vehicle.

In case of the former matt paint in which the inorganic fine powder, such as silica etc. is used, it can accomplish the desired matt effect by painting it on a base material. However, the surface of the film formed by said matt paint is easy to get damaged and does not feel smooth because it is hard and rough.

Moreover, in case of the latter matt paint in which beads-type fine particles, such as polyurethane resin etc. are used, the solvent resistance of the beads-type fine particles is inferior, and thus, it has a fault that the solvents to be used are limited.

Furthermore, in case of polyethylene fine particles, the matt effect is not enough compared with said polyurethane resin, although the solvent resistance thereof is enough.

Moreover, said beads-type fine particles of synthetic resin are used by blending them into the vehicle together with dyes or pigments. But, the dyes are strongly faded, and the pigments are easily separated from said beads-type fine particles of synthetic resin, and thus, in both cases, unevenness of color occurs, and a paint having homogeneous tone of a color can not be obtained.

The inventors have made various studies for eliminating the afore-mentioned faults occurred in using said inorganic fine powder or beads-type fine particles of synthetic resin, and consequently have found a method for obtaining a matt paint which provides a soft feel without stickness, based on the flatness and smoothness of the surface of the film.

SUMMARY OF THE INVENTION

It is an object of the present invention to provide a method for producing a matt paint wherein the disadvantages found in the prior are overcome.

It is another object of the present invention to provide such a method wherein the surface of a film of the matt paint shows a soft feel without stickness.

It is furthermore another object of the present invention to provide such a method wherein a colored film can be formed.

According to the present invention, a method for producing a matt paint is provided as defined in the claims. The method comprises steps of choosing particles having a particle size of 1~100 $\mu$m of exactly spherical acrylic particles colored by pigments, and blending them into a vehicle. More particularly, the method for producing a matt paint comprises the steps of blending a pigment into a water-insoluble polyfunctional vinyl monomer or a mixture of said polyfunctional vinyl monomer and a monofunctional vinyl monomer, obtaining colored and exactly spherical fine particles having a particle size of 1~100 $\mu$m by heat-polymerizing said blend in the presence of a protective colloidant in a water soluble medium, and blending the obtained particles into a vehicle.

DETAILED DESCRIPTION

The present invention is illustrated by the way of embodiments in detail as follows.

Polyfunctional vinyl monomers

The polyfunctional vinyl monomers used in the present invention are water insoluble monomers having more than two $\alpha$, $\beta$-ethylenic unsaturated double bonds in one molecule, and are exemplarily designated as the following acrylates, the corresponding methacrylates, a mixture of the acrylates and the methacrylates, aromatic divinyl compounds, such as divinylbenzene, etc..

Said acrylates are ethylene glycol diacrylate, diethylene glycol diacrylate, triethylene glycol diacrylate, polyethylene glycol diacrylate, polypropylene glycol diacrylate, butylene glycol diacrylate, neopentyl glycol diacrylate, 1, 4-buthane diol acrylate, 1, 6-hexane diol diacrylate, pentaerythritol triacrylate, and trimethylol propane triacrylate.

## Monofunctional vinyl monomers

The monofunctional vinyl monomers which are copolymerized with said monomers are monomers having one $\alpha$, $\beta$-ethylenic unsaturated bond in one molecule. Preferred examples are as follows. Ethyl acrylate, butyl acrylate, 2-ethyl hexyl acrylate, methyl methacrylate, butyl methacrylate, acrylic acid, methacrylic acid, itaconic acid, 2-hydroxy ethyl ester of acrylic acid or methacrylic acid, amids of acrylic acid or methacrylic acid, N-methylol or N-alkoxy methyl derivatives of acrylic acid or methacrylic acid, acrylonitrile, methacrylonitrile etc..

## Pigments

The preferred pigments blended into said monomers are, for example, phthalocyanine group pigments, anthraquinone group pigments, quinacridone group pigments, indigo group pigments, thioindigo group pigments, azo group pigments, quinophthalone group pigments, perillene group pigments, isoindolinone group pigments, etc..

## Protective colloidants

The protective colloidants are exemplified as polyvinylalcohol, hydroxyethyl cellulose, polyacrylic acid, polyacrylamide, etc..

## Surfactants

In an embodiment of the present invention, surfactants can be used together with said protective colloidants, and they are exemplified as usual anionic surfactants, such as alkyl sodium sulfate, alkylallyl sodium sulfate, sodium salt of fatty acid etc., nonionic surfactants, such as polyoxyethylene dodecylether, polyoxyethylene octylphenolether etc., and others.

## Polymerization initiators

Polymerization initiators may be used in the present invention, and are exemplified as radical polymerization initiators, such as azobis isobutylonitrile, azobis valeronitrile, benzoilperoxide, t-butylperoxide etc..

## Production

The colored and exactly spherical fine particles of one embodiment of the present invention are produced as follows.

First of all, pigments are blended into a polyfunctional vinyl monomer or a mixture of said monomer and a monofunctional vinyl monomer, and then, the obtained blend is mixed homogeneously by a role mill or sand mill. After decreasing the viscosity of said blend by adding thereto a hydrophilic medium and a radical polymerization initiator, a solution containing a protective colloidant and water, which is separately prepared, is furthemore added into said blend. Then, the blend is stirred by a high speed stirrer having shearing force with the observation of the particle size by a microscope, and when the particle size reaches a desired size, the stirring is stopped. After transferring the content into a vessel having an ordinary wing stirrer, it is heated to a temperature of 50°C to 55°C to remove a part of the medium, and furthermore, the temperature is raised to 65°C to 70°C to finish the polymerization reaction.

## Vehicle

As vehicles which are further essential ingredients in the present invention, all of the ones used in the past, in air dry paints or thermo-setting paints, may be used in the present invention.

The air dry paints are exemplified as vinyl chloridevinyl acetate copolymer resin paint, polyvinylalcohol resin paint, polyvinylbutyral resin paint, butyl methacrylate resin paint, methyl methacrylate resin paint, various kinds of oil-modified alkyd resin paint, etc..

The low temperature thermo-setting paints are shown as melamine alkyd resin paint, amino alkyd resin paint, thermo-setting acrylic resin paint, epoxy resin paint, polyurethane resin paint, etc..

Blend

In the present invention, said ingredients of resin paints are resolved in a solvent, and the colored and exactly spherical fine particles are blended thereinto in an amount of 5 to 75 percents by weight, preferably 15 to 65 percents by weight to said resin ingredients.

Furthermore, viscosity increaser, extender pigments, stabilizers, surfactants etc. can be used in the present invention according to demand.

The solvents to be used are ones used in the ordinary paints, and are exemplified as alcohol, esters of acetic acid, acetone, methylisobutyl ketone, aromatic compounds, cellosolve, etc..

EXAMPLE

Example 1

Table 1 (1)

| | | Examples | | |
|---|---|---|---|---|
| | | 1 — 1 | 1 — 2 | 1 — 3 |
| Polyfunctional vinyl monomers | Ethylene oxide modified bisphenol A diacrylate | 40 | 30 | |
| | Trimethylolpropane triacrylate | | 30 | 40 |
| | Pentaerythritol tetramethacrylate | | 20 | |
| | 1,6-hexamethylene-diacrylate | | | 24 |
| Monofunctional vinyl monomers | Butylmethacrylate | 40 | | |
| | Stearyl methacrylate | | | 16 |
| AIBN (Polymerization initiator) | | 0,8 | 0,8 | 0,8 |
| Copper Phthalocyanine Blue Disazo Yellow Carbon Black | | 4 | 4 | 4 |

Table 1 (2)

| | | Examples | | |
|---|---|---|---|---|
| | | 1 − 4 | 1 − 5 | 1 − 6 |
| Polyfunctional vinyl monomers | Ethylene oxide modified bisphenol A diacrylate | 46 | 40 | |
| | Trimethylolpropane triacrylate | | | 30 |
| | Pentaerythritol tetramethacrylate | | | 10 |
| | Polyethylene glycoldiacrylate | 10 | 10 | |
| | 1,6-hexamethylene-diacrylate | 24 | | 40 |
| Monofunctional vinyl monomers | Methylmethacrylate | | 30 | |
| AIBN (Polymerization initiator) | | 0,8 | 0,8 | 0,8 |
| Carbon Black Red iron oxide Titanium dioxide | | 16 | 24 | 24 |

(notes)  「AIBN」 means azoiso butylonitrile.

The monomers and pigment dispersions, which are respectively blended as mentioned in examples 1-1 to 1-6 on Table 1, are added into a water solution consisting of 10 parts by weight of polyvinylalcohol and 200 parts by weight of water at a temperature of 50°C with stirring by a high speed stirrer (DISSOLVER) to obtain a suspension having an average particle size 30 $\mu$m. The suspension is kept at 65 to 75°C for 50 minutes with stirring by a propeller type stirrer to polymerize it.

Then, the polymerized slary is filtrated, washed by water and dried at 60°C for 30 minutes to obtain the colored and exactly spherical fine particles.

Example 2

| | |
|---|---|
| The colored and exactly spherical particles obtained in example 1-2 | 1,6 parts by weight, |
| the colored and exactly spherical particles obtained in example 1-5 | 0,8 parts by weight, |
| acryl lacquer (Trade name : ACRIC 1026 CLEAR, KANSAI PAINT CO., LTD.) , | 20,0 parts by weight, |
| thinner (Trade name : ACRIC 1043 THINNER, KANSAI PAINT CO., LTD.) | 10,0 parts by weight. |

Said blend is dispersed by a paint shaker for 30 minutes to obtain a composition of a matt paint.

Then, the paint composition is diluted to a suitable viscosity with a thinner, and is painted on a coating paper by a spray. The surface of the painted film is observed by a 60 degree mirror reflector to determine the gloss thereof. As a result, the reflection is less than 5%, the surface of the film shows a matt condition which provides a soft feel, and heat, light and solvent resistances are excellent, respectively.

Example 3

| | |
|---|---|
| The colored and exactly spherical particles obtained in example 1-2 | 1,2 parts by weight, |
| the colored and exactly spherical particles obtained in example 1-6 | 8,8 parts by weight, |
| alkyd resin (Trade name : HITALOID 2462A HITACHI KASEI CO., LTD. ) | 13,8 parts by weight, |
| xylene | 10,0 parts by weight. |

Said blend is dispersed by a paint shaker for 30 minutes, and thereafter, 5 parts by weight of melamine resin (Trade name : MELAN 28 HITACHI KASEI CO., LTD.) are added thereinto and the blend is stirred to obtain a matt paint.

Then, the matt paint is diluted with xylene and painted by a spray on an alminium plate, and thereafter, it is baked at 140 °C for 30 minutes, The surface of the painted film is observed with a 60 degree mirror reflector to determine the gloss thereof, As a result, the reflection is less than 5%, the surface of the film shows a matt condition which provides a soft feel, and heat, light and solvent resistances are excellent, respectively.

Example 4

| | |
|---|---|
| The colored and exactly spherical particles obtained in example 1-4 | 1,2 parts by weight, |
| the colored and exactly spherical particles obtained in example 1-3 | 5,6 parts by weight, |
| the colored and exactly spherical particles obtained in example 1-5 | 3,2 parts by weight, |
| acrylpolyol (Trade name : HITALOID 3001 HITACHI KASEI CO., LTD.) | 14,6 parts by weight, |
| toluene | 10 parts by weight. |

Said blend is dispersed by a paint shaker for 30 minutes, and thereafter, 3,7 parts by weight of polyisocyanate (Trade name : 「BURNOCK」 DAINIPPON INK AND CHEMICALS INC.) are added thereinto and the blend is stirred and mixed to obtain a matt paint.

Then, the matt paint is diluted with toluene and painted by a spray on an acrylic resin board, and thereafter it is dryed at 70°C, for 5 minutes. The surface of the painted film is observed with a 60 degree mirror reflector to determine the gloss thereof. As a result, the reflection is less than 5%, the surface of the film shows a matt condition which provides a soft feel, and heat, light and solvent resistances are excellent, respectively.

Comparative example 1

```
The exactly spherical polyethylene particles
                                        ···10,0 parts by weight,
acrylic lacquer (Trade name : 「ACRIC 1026 CLEAR」 KANSAI PAINT
CO., LTD.)                               ···25,0 parts by weight,
cupper phthalocyanine pigment            ···1,5 parts by weight,
titanium dioxide pigment                 ···5,0 parts by weight,
thinner                                  ···17,0 parts by weight.
```

Said blend is painted on a coating paper by a spray as same manner shown in example 1. The obtained surface of the film shows a soft feel. The surface of the painted film is observed with a 60 degree mirror reflector to determine the gloss thereof. As a result, however, the reflection is 65%, and the matt condition is inferior compared with the present invention in which the colored and exactly spherical particles are used.

Comparative example 2

```
Exactly spherical polyurethane particles
                                        ···10,0 parts by weight,
acrylpolyol (Trade name : 「HITALOID 3001」 HITACHI KASEI CO.,
LTD.)                                    ···14,6 parts by weight,
titanium dioxide pigment                 ···3,8 parts by weight,
toluene                                  ···10,0 parts by weight.
```

Said blend is dispersed by a paint shaker for 30 minutes, and then, 3,7 parts by weight of polyisocyanate (Trade name : 「BURNOCK」 DAINIPPON INK AND CHEMICALS INC.) are added thereinto and the blend is stirred and mixed to obtain a paint.

The paint is painted on an acrylic resin board by a spray.

The surface of the painted film is observed with a 60 degree mirror reflector to determine the gloss thereof. As a result, the reflection is 86%.

It is considered that the matt effect is not enough since a part of the exactly spherical polyurethane particles is resolved or swelled with toluene.

The matt paint of the present invention is excellent in light, heat and solvent resistances, and forms a matt film having a soft feel without stickness.

Moreover, the matt paint of the present invention does not show any color separation and provides a homogeneous and colored film even though plural colors are used in combination, since the exactly spherical polymer particles are themselves colored by pigments.

Furthermore, the colored and exactly spherical particles used in the present invention are formed by resin beads excellent in light and heat resistances, and thus, the present matt paint can be used not only in air dry paint but also in thermo-setting paint, and further, the present matt paint is excellent in solvent

8

resistance, and thus, it is suitable for paints composed of various kinds of solvents.

Moreover, the matt paint of the present invention forms a matt film, the surface of which is difficult to get damaged, and provides a soft feel, and thus, it is utilized as materials in various kinds of field, such as materials for room decoration, inner parts of cars, furnitures, office machines etc..

## Claims

1. A method for producing a matt paint which comprises steps of:
   blending a pigment into a water-insoluble polyfunctional vinyl monomer having more than two $\alpha,\beta$-ethylenic unsaturated double bonds in one molecule or a mixture of said polyfunctional vinyl monomer and a monofunctional vinyl monomer having one $\alpha,\beta$-ethylenic unsaturated bond in one molecule;
   heat-polymerizing said blend in the presence of a protective colloidant in a water soluble medium while stirring and observing the particle size until it reaches the range of 1 to 100 $\mu$m, to obtain colored and exactly spherical fine particles; and
   blending the obtained particles into a vehicle in an amount of 5 to 75 percent by weight.

2. A method for producing a matt paint as claimed in claim 1,
   wherein the polyfunctional vinyl monomers are acrylates, the corresponding methacrylates, a mixture of said acrylates and the methacrylates, or aromatic divinyl compounds.

3. A method for producing a matt paint as claimed in claim 2,
   wherein the acrylates are selected from the group consisting of ethylene glycol diacrylate, diethylene glycol diacrylate, triethylene glycol diacrylate, polyethylene glycol diacrylate, polypropylene glycol diacrylate, butylene glycol diacrylate, neopentyl glycol diacrylate, 1,4-buthane diol acrylate, 1,6-hexane diol diacrylate, pentaerythritol triacrylate, and trimethylol propane triacrylate.

4. A method for producing a matt paint as claimed in claim 1,
   wherein said monofunctional vinyl monomers are selected from the group consisting of ethyl acrylate, butyl acrylate, 2-ethyl hexyl acrylate, methyl methacrylate, butyl methacrylate, acrylic acid, methacrylic acid, itaconic acid, 2-hydroxy ethyl ester of acrylic acid or methacrylic acid, amids of acrylic acid or methacrylic acid, N-methylol or N-alkoxy methyl derivatives of acrylic acid or methacrylic acid, acrylonitrile, and methacrylonitrile.

5. A method for producing a matt paint as claimed in any of claims 1 to 4,
   wherein the pigments are selected from the group consisting of phthalocyanine group pigments, anthraquinone group pigments, quinacridone group pigments, indigo group pigments, thioindigo group pigments, azo group pigments, quinophthalone group pigments, perillene group pigments, and isoindolinone group pigments.

6. A method for producing a matt paint as claimed in any of claims 1 to 5,
   wherein the protective collolidants are selected from the group consisting of polyvinylalcohol, hydroxyethyl cellulose, polyacrylic acid, and polyacrylamide.

7. A method for producing a matt paint as claimed in any of claims 1 to 6,
   wherein the vehicles are all of the vehicles used in air dry paints or thermo-setting paints.

## Patentansprüche

1. Verfahren zum Herstellen eines matten Anstrichmittels, das folgende Schritte aufweist:
   Zumischen eines Pigments zu einem wasserunlöslichen polyfunktionellen Vinylmonomer, das mehr als zwei $\alpha,\beta$-ethylenisch ungesättigte Doppelbindungen in einem Molekül hat, oder zu einem Gemisch aus dem polyfunktionellen Vinylmonomer und einem monofunktionellen Vinylmonomer, das eine $\alpha,\beta$-ethylenisch ungesättigte Bindung in einem Molekül hat;
   Wärmepolymerisieren des Gemischs in Gegenwart eines Schutzkolloids in einem wasserlöslichen Medium unter Rühren und Beobachten der Teilchengröße, bis sie den Bereich von 1 bis 100 $\mu$m erreicht, um farbige und exakt kugelförmige feine Teilchen zu erhalten; und
   Zumischen der erhaltenen Teilchen zu einem Träger in einer Menge von 5 bis 75 Gew.-%.

**2.** Verfahren zum Herstellen eines matten Anstrichmittels nach Anspruch 1,
wobei die polyfunktionellen Vinylmonomere Acrylate, die entsprechenden Methacrylate, ein Gemisch aus den Acrylaten und den Methacrylaten oder aromatische Divinylverbindungen sind.

**3.** Verfahren zum Herstellen eines matten Anstrichmittels nach Anspruch 2,
wobei die Acrylate aus der Gruppe ausgewählt sind, die aus Ethylenglykoldiacrylat, Diethylenglykoldiacrylat, Triethylenglykoldiacrylat, Polyethylenglykoldiacrylat, Polypropylenglykoldiacrylat, Butylenglykoldiacrylat, Neopentylglykoldiacrylat, 1,4-Butandiolacrylat, 1,6-Hexandioldiacrylat, Pentaerythrittriacrylat und Trimethylolpropantriacrylat besteht.

**4.** Verfahren zum Herstellen eines matten Anstrichmittels nach Anspruch 1,
wobei die monofunktionellen Vinylmonomere aus der Gruppe ausgewählt sind, die aus Ethylacrylat, Butylacrylat, 2-Ethylhexylacrylat, Methylmethacrylat, Butylmethacrylat, Acrylsäure, Methacrylsäure, Itaconsäure, 2-Hydroxyethylester von Acrylsäure oder Methacrylsäure, Amiden von Acrylsäure oder Methacrylsäure, N-Methylol- oder N-Alkoxymethyl-Derivaten von Acrylsäure oder Methacrylsäure, Acrylnitril und Methacrylnitril besteht.

**5.** Verfahren zum Herstellen eines matten Anstrichmittels nach einem der Ansprüche 1 bis 4,
wobei die Pigmente aus der Gruppe ausgewählt sind, die aus Pigmenten der Phthalocyaningruppe, Pigmenten der Anthrachinongruppe, Pigmenten der Chinacridongruppe, Pigmenten der Indigogruppe, Pigmenten der Thioindigogruppe, Pigmenten der Azogruppe, Pigmenten der Chinophthalongruppe, Pigmenten der Perillengruppe und Pigmenten der Isoindolinongruppe besteht.

**6.** Verfahren zum Herstellen eines matten Anstrichmittels nach einem der Ansprüche 1 bis 5,
wobei die Schutzkolloide aus der Gruppe ausgewählt sind, die aus Polyvinylalkohol, Hydroxyethylcellulose, Polyacrylsäure und Polyacrylamid besteht.

**7.** Verfahren zum Herstellen eines matten Anstrichmittels nach einem der Ansprüche 1 bis 6,
wobei die Träger alle solche Träger sind, die bei lufttrocknenden Anstrichmitteln oder wärmehärtbaren Anstrichmitteln verwendet werden.

## Revendications

**1.** Procédé de production d'une peinture mate comprenant les opérations suivantes :
mélange d'un pigment à un monomère vinylique polyfonctionnel insoluble dans l'eau ayant dans sa molécule plus de deux doubles liaisons $\alpha,\beta$-éthyléniques non saturées ou à un mélange de ce monomère vinylique polyfonctionnel et d'un monomère vinylique monofonctionnel ayant dans sa molécule une seule liaison $\alpha,\beta$-éthylénique non saturée,
polymérisation à chaud de ce mélange en présence d'un colloïdant protecteur dans un milieu soluble dans l'eau avec agitation et observation de la grosseur des particules jusqu'à ce qu'elle atteigne le domaine de 1 à 100 $\mu$m, pour l'obtention de particules fines colorées et exactement sphériques, et mélange des particules obtenues à un milieu de suspension dans une proportion de 5 à 75 % en poids.

**2.** Procédé de production d'une peinture mate selon la revendication 1, dans lequel les monomères vinyliques polyfonctionnels sont des acrylates, les méthacrylates correspondants, un mélange de ces acrylates et des méthacrylates, ou des composés divinyliques aromatiques.

**3.** Procédé de production d'une peinture mate selon la revendication 2, dans lequel les acrylates sont choisis dans le groupe comprenant le diacrylate d'éthylèneglycol, le diacrylate de diéthylèneglycol, le diacrylate de triéthylèneglycol, le diacrylate de poyéthylèneglycol, le diacrylate de polypropylèneglycol, le diacrylate de butylèneglycol, le diacrylate de néopentylglycol, l'acrylate de butanediol-1,4, le diacrylate d'hexanediol-1,6, le triacrylate de pentaérythritol et le triacrylate de triméthylolpropane.

**4.** Procédé de production d'une peinture mate selon la revendication 1, dans lequel les monomères vinyliques monofonctionnels sont choisis dans le groupe comprenant l'acrylate d'éthyle, l'acrylate de butyle, l'acrylate d'éthyl-2 hexyle, le méthacrylate de méthyle, le méthacrylate de butyle, l'acide acrylique, l'acide méthacrylique, l'acide itaconique, l'acrylate ou le méthacrylate d'hydroxy-2 éthyle, les amides de l'acide acrylique ou de l'acide méthacrylique, les dérivés N-méthylol ou N-alcoxy méthylés de l'acide acrylique ou de l'acide méthacrylique, l'acrylonitrile et le méthacrylonitrile.

5. Procédé de production d'une peinture mate selon l'une des revendications 1 à 4, dans lequel les pigments sont choisis dans le groupe comprenant les pigments de phtalocyanines, les pigments anthraquinoniques, les pigments de quinacridones, les pigments indigoïdes, les pigments thioindigoïdes, les pigments azoïques, les pigments de quinophtalone, les pigments périléniques et les pigments d'isoindolinone.

6. Procédé de production d'une peinture mate selon l'une des revendications 1 à 5, dans lequel les colloïdants protecteurs sont choisis dans le groupe comprenant l'alcool polyvinylique, l'hydroxyéthylcellulose, l'acide polyacrylique et le polyacrylamide.

7. Procédé de production d'une peinture mate selon l'une des revendications 1 à 6, dans lequel les milieux de suspension sont tous ceux qui sont utilisés dans les peintures séchant à l'air ou les peintures thermodurcissables.